# EUROPEAN PATENT APPLICATION

(11) **EP 4 836 490 A1**
(43) Date of publication of application: **04.11.2026**
(21) Application number: 24910754.1
(22) Date of filing: 12.12.2024
(51) Int. Cl.: H04W 24/02

(54) **SENSING PROCESSING METHOD, INTEGRATED SENSING AND COMMUNICATION SYSTEM, COMMUNICATION DEVICE, AND STORAGE MEDIUM**

(30) Priority: 29.12.2023 CN 202311866134
(71) Applicant: ZTE Corporation, Shenzhen, Guangdong 518057 (CN)
(72) Inventor: LIU, Xiangfeng, Shenzhen, Guangdong 518057 (CN); LI, Ping, Shenzhen, Guangdong 518057 (CN); DAI, Qian, Shenzhen, Guangdong 518057 (CN); GUO, Xiaojiang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/138837
(87) International publication number: WO 2025/139823

(57) **Abstract**

The present invention provides a sensing processing method, an integrated sensing and communication system, a communication device, and a storage medium. The sensing processing method comprises: obtaining a trained artificial intelligence model from a sensing server; on the basis of the artificial intelligence model, processing sensing data to obtain a sensing result; and sending the artificial intelligence sensing result to a core network element.

## Description

The present disclosure claims priority to Chinese Patent Application No. 202311866134.7 filed on December 29, 2023, the entire contents of which are incorporated herein by reference.

### TECHNICAL FIELD

The present disclosure relates to the technical field of communications, and in particular, to a sensing processing method, an integrated sensing and communication system, a communication apparatus, and a storage medium.

### BACKGROUND

With the widespread application of the 5th generation (5G) communication system, 5G, while meeting the needs of individual users, is also gradually penetrating into various industries and fields of society, thereby realizing the upgrade from consumer applications to industrial applications. Integrated sensing and communication is based on related network architecture and communication waveforms, uses related communication device to realize sensing applications, promotes the development of innovative application services, and is an important research direction of 5G.

### SUMMARY

In a first aspect, a sensing processing method is provided, which is applied to a sensing function entity, and the sensing processing method includes: acquiring a trained artificial intelligence model from a sensing server; processing sensing data based on the artificial intelligence model to obtain a sensing result; and sending the artificial intelligence sensing result to a core network element.

In a second aspect, a sensing processing method is provided, which is applied to a sensing server, and the sensing processing method includes: training an artificial intelligence model, where the artificial intelligence model is used to process sensing data to obtain a sensing result; and sending the trained artificial intelligence model to a sensing function entity.

In a third aspect, an integrated sensing and communication system is provided, the integrated sensing and communication system includes: a sensing server, configured to train an artificial intelligence model; and a sensing function entity, configured to acquire a trained artificial intelligence model from the sensing server, process sensing data based on the artificial intelligence model to obtain a sensing result, and send the artificial intelligence sensing result to a core network element.

In a fourth aspect, a communication apparatus is provided, and the communication apparatus includes: a memory and a processor. The memory is coupled to the processor, the memory is configured to store computer programs, and the processor, upon executing the computer programs, implementing the above-mentioned sensing processing methods.

In a fifth aspect, a computer-readable storage medium is provided, computer program instructions are stored on the computer-readable storage medium, and the computer program instructions, upon being executed by a processor, implement the above-mentioned sensing processing methods.

In a sixth aspect, a computer program product is provided, the computer program product includes computer program instructions, and the computer program instructions, upon being executed by a processor, implement the above-mentioned sensing processing methods.

### BRIEF DESCRIPTION OF THE DRAWINGS

In order to illustrate the technical solutions in the present disclosure more clearly, accompanying drawings needed to be used in some embodiments of the present disclosure will be introduced briefly below. Obviously, the described accompanying drawings below are merely accompanying drawings of some embodiments of the present disclosure, and for a person of ordinary skill in the art can obtain other accompanying drawings according to these accompanying drawings.
FIG. 1 is a schematic diagram of a sensing scenario according to some embodiments of the present disclosure.
FIG. 2 is a schematic diagram of an architecture of an integrated sensing and communication system according to some embodiments of the present disclosure.
FIG. 3 is a flowchart of a model training method according to some embodiments of the present disclosure.
FIG. 4 is a flowchart of a sensing processing method according to some embodiments of the present disclosure.
FIG. 5 is a flowchart of another sensing processing method according to some embodiments of the present disclosure.
FIG. 6 is a schematic diagram of a range-doppler map according to some embodiments of the present disclosure.
FIG. 7 is a schematic diagram of a correspondence relationship of feature data according to some embodiments of the present disclosure.
FIG. 8 is a schematic diagram of an architecture of a convolutional neural network according to some embodiments of the present disclosure.
FIG. 9 is a schematic diagram of a structure of a long short term memory neural network model according to some embodiments of the present disclosure.
FIG. 10 is a schematic diagram of a structure of another long short term memory neural network model according to some embodiments of the present disclosure.
FIG. 11 is a flowchart of yet another sensing processing method according to some embodiments of the present disclosure.
FIG. 12 is a schematic diagram of a structure of a sensing processing apparatus according to some embodiments of the present disclosure.
FIG. 13 is a schematic diagram of a structure of another sensing processing apparatus according to some embodiments of the present disclosure.
FIG. 14 is a structural schematic diagram of a communication apparatus according to some embodiments of the present disclosure.

### DETAILED DESCRIPTION

The technical solutions in the present disclosure will be described below clearly and completely in conjunction with the accompanying drawings in the present disclosure. Obviously, the described embodiments are merely a part of the embodiments of the present disclosure, but not all of the embodiments of the present disclosure. All other embodiments obtained based on the embodiments of the present disclosure by an ordinary person of those skilled in the art without paying any creative effort shall belong to the protection scope of the present disclosure.

It should be noted that, in the present disclosure, the words "exemplary/exemplarily" or "for example" are used to present an example, an illustration, or a description. Any embodiment or design scheme described with the words "exemplary/exemplarily" or "for example" in the present disclosure should not be construed as being more preferred or advantageous than other embodiments or design solutions. Specifically, the usage of the wordings such as "exemplary/exemplarily" or "for example" is intended to present related concepts in a concrete way.

Hereinafter, terms "first" and "second," etc., are used for descriptive purposes only, and are not to be understood as indicating or implying the relative importance or implicitly indicating a number of indicated technical features. Thus, a feature defined with "first", "second", etc., may explicitly or implicitly include one or more of that feature.

In the description of the present disclosure, unless otherwise specified, "/" means an "or" relationship, for example, "A/B" may represent A or B. The term "and/or" in the description merely used to represents a relevant relationship for describing related objects, which represents that there may be three relationships. For example, A and/or B may represent: only A; only B; or both A and B. In addition, "at least one" means a number of one or more, and "plurality" means a number of two or more.

The method provided in the embodiments of the present disclosure may be applied to various communication systems. For example, the communication system may be a 5G communication system, a Wi-Fi (Wireless Fidelity) system, a 3GPP (3rd Generation Partnership Project) related communication system, a future evolved communication system (such as a 6th generation (6G)) communication system, etc.), or a system integrated with multiple systems, which is not limited in the embodiments of the present disclosure.

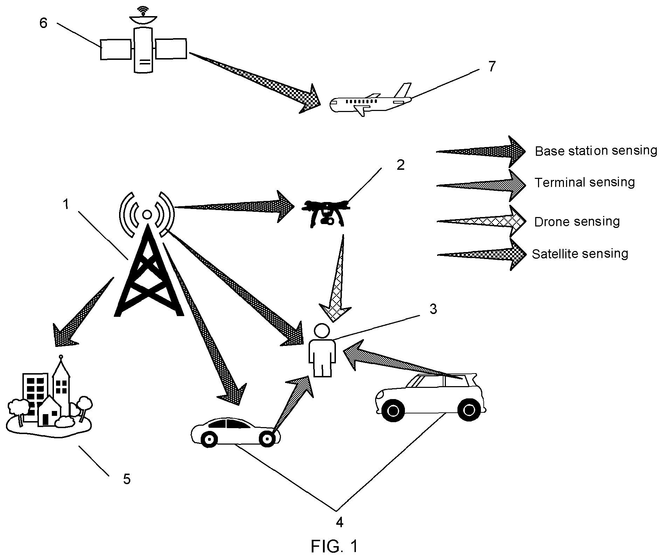

With the widespread application of the 5G communication system, 5G, while meeting the needs of individual users, is also gradually penetrating into various industries and fields of society, thereby realizing the upgrade from consumer applications to industrial applications. Integrated sensing and communication is based on related network architecture and communication waveforms, uses related communication device to realize sensing applications, promotes the development of innovative application services, and is an important research direction of 5G. As shown in FIG. 1, FIG. 1 is a schematic diagram of a sensing scenario according to the embodiments of the present disclosure. A sensing system in a sensing base station 1 may perform base station sensing on a drone 2, a human body 3, a vehicle 4, and a building 5, a sensing system in a satellite 6 may perform satellite sensing on an aircraft 7 (illustrated as an airplane), a sensing system in the drone 2 may perform drone sensing on the human body, and a sensing terminal in the vehicle 4 may perform terminal sensing on the human body 3.

In some embodiments, a terminal performing terminal sensing may also be a device with full-duplex transmission capability. The terminal may be a mobile phone, a pad, a computer with wireless transceiver functions, a virtual reality (VR) terminal, an augmented reality (AR) terminal, a wireless terminal in the industrial control, a wireless terminal in self driving, a wireless terminal in a remote medical, a wireless terminal in a smart grid, a wireless terminal in transportation safety, a wireless terminal in smart city, a wireless terminal in smart home, etc. The application scenarios are not limited in the embodiments of the present disclosure. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, a UE apparatus, etc., which is not limited in the embodiments of the present disclosure.

In currently applied sensing functions, most applied sensing functions utilize conventional algorithms for sensing. As the network scale increases, business types become more diverse, and terminal equipment becomes complex and varied, the process for technical personnel to optimize sensing algorithms becomes increasingly difficult. Meanwhile, with the development of software and hardware resources, artificial intelligence is also gradually being widely applied in communication systems. However, the integrated sensing and communication structure based on artificial intelligence has not yet been effectively developed and cannot be adapted to complex and changeable scenarios and applications, resulting in poor intelligent management capability.

In view of the above technical problems, the embodiments of the present disclosure provide a sensing processing method, the concept thereof is: based on the relevant core network, a sensing function entity is newly added, which makes minor modifications to the network architecture and is easy for implementing the sensing function; simultaneously, since the sensing server has strong storage capability and low computing power requirements for the sensing function entity, the artificial intelligence model is trained by the sensing server, and the sensing data is processed based on the trained artificial intelligence model to obtain a sensing result, which makes the acquisition of the sensing result more accurate and less prone to errors, facilitates opening data to other modules or third parties in the system, in order to realize real-time communication of each module in the integrated sensing and communication system and complete sensing tasks.

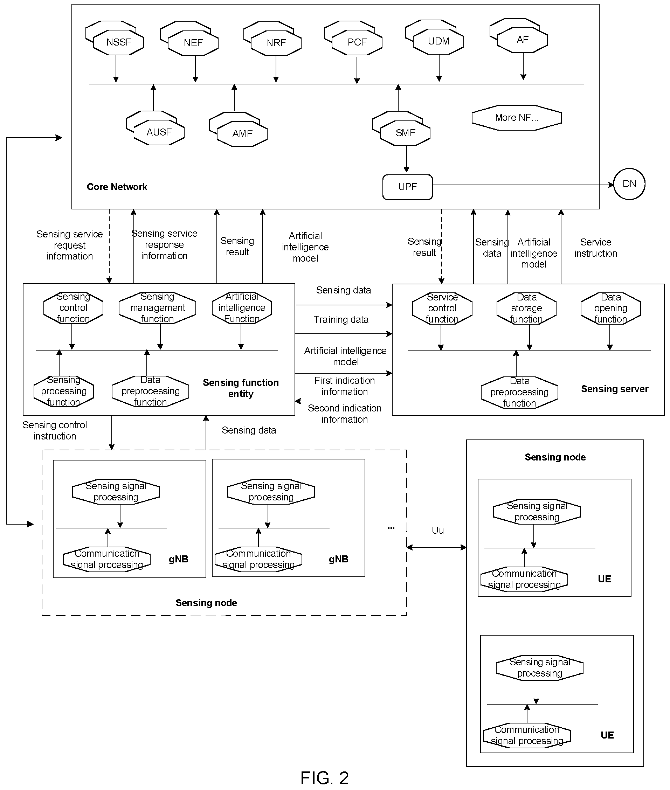

Referring to FIG. 2, FIG. 2 is a schematic diagram of an architecture of an integrated sensing and communication system according to the embodiments of the present disclosure. As shown in FIG. 2, the integrated sensing and communication system includes: a core network, a sensing server, a sensing function entity, and a sensing node.

The core network includes at least one of the following network elements: a network slice selection function (NSSF), a network exposure function (NEF), a network repository function (NRF), a policy control function (PCF), unified data management (UDM), an application function (AF), an authentication server function (AUSF), an access and mobility management function (AMF), a session management function (SMF), a user plane function (UPF), or other possible network functions (NFs).

In some embodiments, the NSSF virtualizes a plurality of end-to-end networks on a general hardware basis through slicing technology, each network of the plurality of end-to-end networks has different NFs, adapting to different types of service requirements.

In some embodiments, the NEF is located between the 5G core network and external third-party application functions, responsible for managing the opening of network data to the outside. All external applications, wanting to access the internal data of the 5G core network, must pass through the NEF.

In some embodiments, the NRF is used for NF registration, management, and status detection, realizing automated management of all NFs. Each NF, upon startup, must register with the NRF to provide services. Registration information includes a type, an address, and a service list, etc., of an NF.

In some embodiments, the PCF is used to manage network behavior using a unified policy framework, and to execute related policies in coordination with user information in a unified data repository (UDR).

In some embodiments, the UDM is used to manage user identities, subscription data, and authentication data, and is also used to manage the registration of service network elements for users.

In some embodiments, the AF refers to various services at an application layer, which may be internal applications of an operator or third-party AFs (such as video servers, game servers). If the AF is an internal AF of an operator, it is in a trusted domain with other NFs and may directly interact and access with other NFs; while a third-party AF is not in the trusted domain and needs to access other NFs through the NEF.

In some embodiments, the AUSF is configured to receive a request from the AMF for identity verification of user equipment (UE), request a key from the UDM, and then forward the key issued by the UDM to the AMF for authentication processing.

In some embodiments, the AMF is configured to provide a session management message transmission channel for the UE and the SMF, provide authentication and authorization functions for user access, and serve as an plane access point for the terminal and radio core network control plane.

In some embodiments, the SMF is configured to support customized mobility management schemes together with the AMF, such as mobile initiated connection only (MICO) or radio access network (RAN) enhancement functions.

In some embodiments, the UPF is mainly configured to send UE service data to a data network (DN), perform data and service identification, action and policy execution, etc.

In some embodiments, the sensing server is configured to train an artificial intelligence model. The artificial intelligence model is used to process sensing data to obtain a sensing result.

In some embodiments, the training of the artificial intelligence model may adopt an offline training and online prediction manner, or may adopt an online training and online prediction manner.

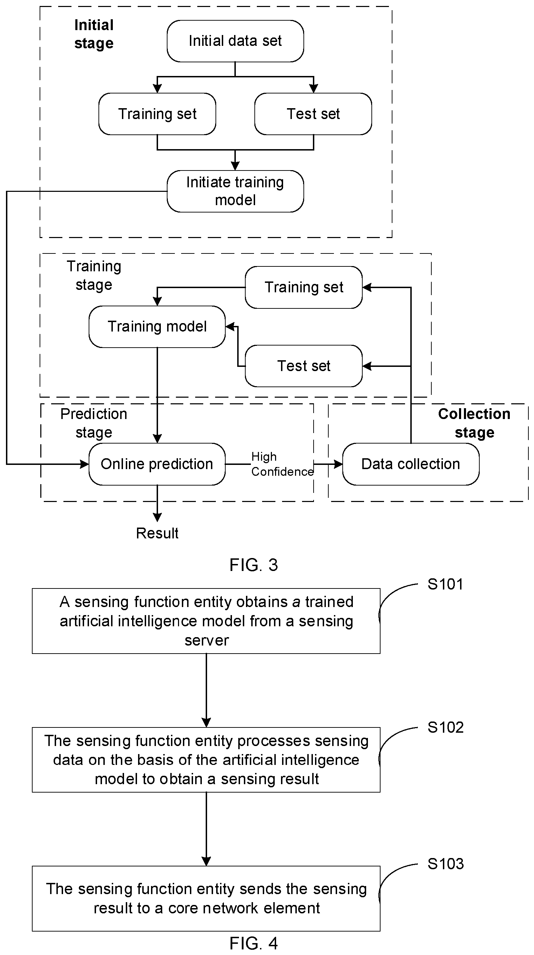

Referring to FIG. 3, FIG. 3 is a flowchart of a model training method according to the embodiments of the present disclosure. As shown in FIG. 3, taking the example of the artificial intelligence model adopting the offline training and online prediction manner, the training of the artificial intelligence model includes four stages: an initial stage, a training stage, a prediction stage, and a collection stage.

In the initial stage of the artificial intelligence model training, an initial data set using simulation data or according to scenario measured data may be stored within the sensing server, and an initial training model is obtained by performing initial training using the initial data set. In the training stage of the artificial intelligence model training, in a case where the training data accumulates to a certain amount, periodic artificial intelligence model training is performed. In the prediction stage of the artificial intelligence model training, the sensing function entity performs real-time online prediction, and passes preprocessed data with high confidence and corresponding sensing results to the sensing server for training sample collection. In the collection stage of the artificial intelligence model training, the sensing server continuously collects data for periodically training the artificial intelligence model.

In some embodiments, the online training and online prediction manner for the artificial intelligence model means that: an artificial intelligence function in the sensing function entity may perform some lightweight online training and online prediction, and pass preprocessed data with high confidence and corresponding sensing results to the sensing server for training sample collection.

In some embodiments, the sensing server is further configured to send the trained artificial intelligence model to the sensing function entity.

In some embodiments, the sensing server is further configured with at least one of the following functions: a service control function, a data preprocessing function, a data storage function, and a data opening function.

The service control function includes at least one of: management for an artificial intelligence application, management for a model training time, management for the data opening function, and management for information transmission; the data preprocessing function is configured to perform feature data extraction or normalization processing on the sensing data; the data storage function is configured to store sensing data with high confidence, as a subsequent data set for periodic training of the artificial intelligence model; the data opening function is configured to provide at least one of the sensing data, the sensing result, and the artificial intelligence model to the outside.

In some embodiments, the management for the artificial intelligence application is configured to determine whether the sensing server performs training of the artificial intelligence model; the management for the model training time is configured to determine a training period of the artificial intelligence model; the management for the data opening function is configured to determine whether to open and share the sensing data and the sensing result; the management for information transmission is configured to determine whether to transmit the open and shared sensing data and sensing result.

In some embodiments, the sensing server is further configured to send the trained artificial intelligence model to the sensing function entity.

In some embodiments, the sensing server is further configured to send at least one of the following contents to the core network element: the sensing data, the sensing result, and the artificial intelligence model.

In some embodiments, the sensing server is further configured to receive the sensing data sent from the sensing node.

In some embodiments, the sensing function entity is configured to acquire the trained artificial intelligence model from the sensing server.

In some embodiments, the sensing function entity is further configured to process the sensing data based on the artificial intelligence model to obtain the sensing result.

The sensing result is used for at least one of: target detection, trajectory tracking, trajectory correction, target association, and target identification.

In some embodiments, the sensing function entity is further configured with at least one of the following functions: a sensing control function, a sensing management function, an artificial intelligence function, a sensing processing function, and a data preprocessing function.

In some embodiments, the sensing control function includes at least one of: selection for a sensing node, management for a sensing resource, management for a sensing time, management for an artificial intelligence application, and management for information transmission.

In some embodiments, the sensing management function includes at least one of: acquiring a sensing service requirement, performing authorization on the sensing service requirement, and determining a sensing task based on the sensing service requirement.

In some embodiments, the artificial intelligence function includes at least one of: training the artificial intelligence model, and using the artificial intelligence model.

In some embodiments, the sensing processing function is configured to perform target detection, false alarm suppression, target association, trajectory tracking, target identification, and trajectory correction on the sensing data.

In some embodiments, the data preprocessing function is configured to perform feature data extraction or normalization processing on the sensing data.

In some embodiments, the sensing function entity is further configured to process the sensing data based on the artificial intelligence model to obtain the sensing result, and send the sensing result to the core network element.

In some embodiments, the sensing function entity may send at least one of the following contents to the core network element: a sensing service request message, a sensing service response message, or the sensing result.

The sensing service request message is used to indicate a sensing service requirement.

In some embodiments, the sensing function entity may further send a sensing control instruction to the sensing node, the sensing control instruction is used to select a sensing node to execute a sensing task.

In some embodiments, the sensing function entity may also send at least one of the following contents to the sensing server: first indication information for indicating whether the sensing server performs model training, and second indication information for indicating a training period.

For example, the sensing control function in the sensing function entity sends at least one of the following contents to the sensing server: first indication information for indicating whether the sensing server performs model training, and second indication information for indicating a training period.

In some embodiments, the sensing node is configured to send a sensing signal and acquire the sensing data.

For example, after the sensing node receives the sensing service request message sent from the sensing function entity, the sensing node sends the sensing signal according to a sensing manner indicated by the sensing service request message, executes the sensing task, and obtains the sensing data.

It should be noted that the sensing data may be measurement data of a physical layer, or may be sensing result data.

In some embodiments, the sensing node is further configured to send the sensing data to the sensing function entity.

For example, after acquiring the sensing data, the sensing node sends the sensing data to the sensing function entity.

In some embodiments, referring to FIG. 2, there may be a plurality of sensing nodes, communication is realized between various sensing nodes through a Uu interface (where U is a user to network interface, u is universal), and each sensing node may be a gNB (generation node B) base station or a UE.

In some embodiments, the sensing data or sensing result processed by the UE is transmitted to the sensing function entity through a Uu interface and a gNB base station.

In some embodiments, the sensing node is further configured for sensing signal processing and communication signal processing.

In addition, an architecture and an application scenario described in the embodiments of the present disclosure are used for illustrating the technical solutions of the embodiments of the present disclosure more clearly, and do not constitute a limitation on the technical solutions provided in the embodiments of the present disclosure. Those of ordinary skill in the art should know that with the evolution of the system architecture and the emergence of new service scenarios, the technical solutions provided in the present disclosure are also applicable to similar technical problems.

A sensing processing method provided in the embodiments of the present disclosure is explained below in conjunction with the drawings of the specification.

Referring to FIG. 4, FIG. 4 is a flowchart of a sensing processing method according to the embodiments of the present disclosure, which is applied to a sensing function entity. As shown in FIG. 4, the sensing processing method includes the following S101 to S103.

In S101, a sensing function entity acquires a trained artificial intelligence model from a sensing server.

In some embodiments, after the sensing function entity receives a sensing service request message sent from a core network element, the sensing function entity acquires the trained artificial intelligence model from the sensing server.

In some embodiments, the sensing service request message may carry a sensing service type, a sensing area, a sensing reporting content, and a sensing reporting type.

The sensing service type is drone sensing, vehicle sensing, or sensing for other targets. The sensing area may be within a radius of 1000 meters centered on the sensing node or other ranges. The sensing reporting content may include a position and a speed of a target. The sensing reporting type may be sensing result reporting.

It should be noted that the target may also be other people, vehicles, or objects with a movement trajectory or state change, and the type of the target is not limited in the present disclosure.

In S102, the sensing function entity processes sensing data based on the artificial intelligence model to obtain a sensing result.

In some embodiments, in response to the sensing service request message, the sensing function entity selects a sensing node to perform sensing detection, and acquires sensing data obtained by the sensing node during a sensing detection process.

In some embodiments, the above mentioned the sensing function entity selecting the sensing node to perform sensing detection in response to the sensing service request message and acquiring sensing data obtained by the sensing node during the sensing detection process may be implemented as the following A1 to A3.

In A1, the sensing function entity determines a sensing task based on the sensing service request message.

For example, in response to the sensing service request message, the sensing function entity performs authorization on the sensing service request message through a sensing management function in the sensing function entity, and after authorization for the sensing service request message is passed, the sensing management function determines the sensing task based on the sensing service request message (such as sensing a drone within a sensing area, mainly sensing a position and a speed of the drone).

In A2, the sensing function entity selects a sensing node to execute the sensing task, and sends a sensing control instruction to the sensing node.

The sensing control instruction is used to indicate the sensing node to execute the sensing task. The sensing control instruction includes sensing configuration information, and the sensing configuration information is used to configure at least one of a sensing resource, a sensing time, and a sensing signal.

For example, after the sensing task is determined, the sensing management function in the sensing function entity sends the sensing service request message to a sensing control function; the sensing control function in the sensing function entity selects the sensing node and a sensing manner for executing the sensing task according to the sensing service request message, and sends a sensing control instruction to the sensing node.

In some embodiments, the sensing node may be a base station, and the sensing manner may be A-transmission-A-reception or A-transmission-B-reception.

It should be noted that A-transmission-A-reception means sending a sensing service request message through a sensing node A (or base station A) and receiving sensing data through the sensing node A (or base station A); A-transmission-B-reception means sending a sensing service request message through a sensing node A (or base station A) and receiving sensing data through a sensing node B (or base station B).

Further, the sensing node starts to execute the sensing task, performs sensing detection on the sensing area, acquires sensing data obtained during the sensing detection process, and sends the sensing data to the sensing function entity.

In some embodiments, the sensing node receives a sensing signal reflected back from a target according to a sensing time-frequency resource for the integrated sensing and communication indicated by the sensing control function, performs baseband processing on the sensing signal, and obtains range-doppler (RD) map data of the target.

In A3, the sensing function entity receives the sensing data sent from the sensing node.

In some embodiments, after the sensing node acquires the sensing data obtained during the sensing detection process, it sends the sensing data (such as the RD map data) to the sensing function entity, and the sensing function entity receives the sensing data.

Further, after the sensing function entity receives the sensing data sent from the sensing node, the sensing function entity processes the sensing data based on the artificial intelligence model to obtain a sensing result.

In S103, the sensing function entity sends the sensing result to the core network element.

In some embodiments, after the sensing function entity obtains the sensing result, it sends the sensing result to the core network element.

It can be understood that, based on the sensing processing method provided in the embodiments of the present disclosure, based on the relevant core network architecture, by acquiring the trained artificial intelligence model from the sensing server with high storage capability, the problem of a large amount of data processing in the core network caused by training the artificial intelligence model in the core network is avoided, and the speed of model acquisition is improved; simultaneously, processing the sensing data based on the trained artificial intelligence model makes the obtained sensing result more accurate, and the automatic processing of the sensing data realizes intelligent management of the sensing data, reducing manpower input; finally, sending the obtained sensing result to the core network element enables data sharing of each module in the system, realizing the integration of sensing and communication.

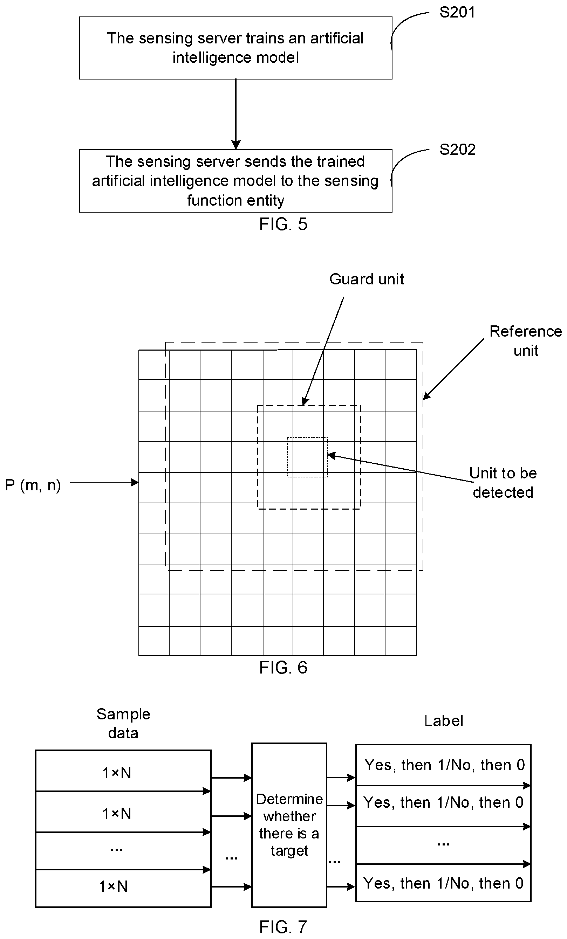

In some embodiments, the artificial intelligence model may be trained by the sensing server. After the sensing function entity acquires the sensing data sent from the sensing node, a sensing processing function in the sensing function entity preprocesses the sensing data and sends the sensing data to the sensing server. The sensing server trains the artificial intelligence model based on the preprocessed sensing data. FIG. 5 is a flowchart of another sensing processing method according to the embodiments of the present disclosure, which is applied to a sensing server. As shown in FIG. 5, the sensing processing method includes the following S201 and S202.

In S201, the sensing server trains an artificial intelligence model.

The artificial intelligence model is configured to process sensing data to obtain a sensing result.

In some embodiments, the sensing server trains the artificial intelligence model in response to first indication information sent from the sensing control function for indicating the sensing server to perform model training.

Referring to FIG. 6, FIG. 6 is a schematic diagram of a range-doppler map according to the embodiments of the present disclosure. As shown in FIG. 6, P_{(m, n)} represents a power of a grid located in the m-th row and n-th column in the RD map, where m and n are integers greater than or equal to 0.

In some embodiments, in the initial training stage of the artificial intelligence model, the sensing server performs model training on the artificial intelligence model using initial test data. After the RD map of the sensing signal is determined, a unit to be detected and a guard unit of the RD data are extracted from the RD map according to a reference unit in the RD map. FIG. 6 shows power data of 9 grids, which constitute feature data of [P₀, P₁, P₂, P₃, P₄, P₅, P₆, P₇, P₈, P₉]. This group of feature data is taken as one sample data, and its corresponding label is 0 or 1, where 0 represents that there is no target, and 1 represents that there is a target, the correspondence relationship is as shown in FIG. 7. FIG. 7 is a schematic diagram of a correspondence relationship of feature data according to the embodiments of the present disclosure.

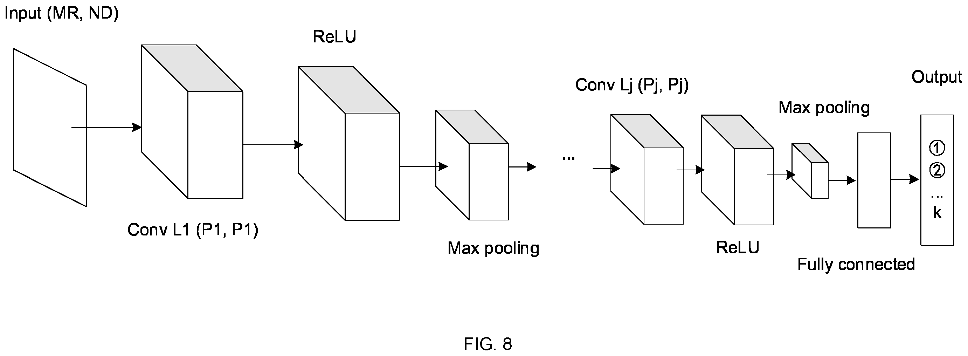

In some embodiments, the present disclosure adopts a convolutional neural (CNN) network for model training. FIG. 8 is a schematic diagram of an architecture of a convolutional neural network according to the embodiments of the present disclosure. As shown in FIG. 8, Lⱼ in Conv Lⱼ(Pⱼ , Pⱼ ) represents a number of convolution kernels, (Pⱼ , Pⱼ ) denotes a size of a convolution kernel, and j is an integer greater than or equal to 1.

It should be noted that the network training is not limited to the CNN network, and other networks, such as a residual network (ResNet) etc., may also be used.

In some embodiments, besides an input layer and a fully connected layer, a CNN network structure may also have J layers of networks in between, each layer of the network includes convolution, activation, and pooling operations, where J is an integer greater than or equal to 1.

It should be noted that the CNN network model is a type of feedforward neural network that includes convolution calculation and has a deep structure. The CNN network model has representative learning capability and may perform translation-invariant classification on input information according to its hierarchical structure.

In some embodiments, an activation function of the CNN network adopts a linear rectification function (ReLU), as shown in formula (1): ${f}_{x} = max \left(0, x\right)$ Formula (1)

It should be noted that the ReLU function, also known as a rectified linear unit, is an activation function commonly used in artificial neural networks, which generally refers to a nonlinear function represented by a ramp function and its variants.

In some embodiments, an activation function of the fully connected layer uses a Sigmoid function, as shown in formula (2): ${S}_{x} = \frac{1}{1 + {e}^{- x}}$ Formula (2)

It should be noted that the Sigmoid function is a common S-shaped function in biology, also known as an S-shaped growth curve. In information science, due to its properties of being monotonically increasing and having a monotonically increasing inverse function, the Sigmoid function is often used as an activation function of a neural network, mapping a variable between (0,1).

In some embodiments, a loss function used by the fully connected layer is a cross-entropy function, as shown in formula (3): $Loss = - \frac{1}{{O}_{s}} {\sum }_{i = 1}^{{O}_{s}} \left({y}_{i}log\hat{{y}_{i}}+\left(1-{y}_{i}\right) log \left(1-\hat{{y}_{i}}\right)\right)$ Formula (3) where Oₛ represents an output size, yᵢ represents a true value of a sample, and $\hat{{y}_{i}}$ represents a predicted value output by the model.

It should be noted that the cross-entropy function is mainly used to measure the difference information between two probability distributions. The meaning of cross-entropy is the difficulty of text recognition by the model, or from the perspective of compression, how many bits are used to encode each word on average.

In some embodiments, the initial test data may be split according to 80% of the data as a training set and 20% of the data as a test set, the training set is used to train the artificial intelligence model, and the test set is used to test the artificial intelligence model.

In S202, the sensing server sends the trained artificial intelligence model to the sensing function entity.

In some embodiments, the sensing server sends the trained artificial intelligence model to the sensing function entity, and the sensing function entity processes the sensing data based on the artificial intelligence model, and extracts data of the RD map. As shown in FIG. 6 above, the feature data [P₀, P₁, P₂ , P₃, P₄ , P₅, P₆ , P₇ , P₈ , P₉] is extracted, and this feature data is used as an input of the artificial intelligence model, with an online prediction output of there being no target (0) or there being a target (1).

In some embodiments, for feature data with there being a target, other sensing detection is performed on the target, such as direction of arrival (DOA) estimation, signal-noise ratio (SNR) estimation, speed estimation, power calculation, etc.

It should be noted that DOA estimation is a positioning technology that obtains distance information and direction information of a target by processing a received echo signal, and SNR refers to a ratio of the strength of a received useful signal to the strength of a received interference signal (noise and interference).

Further, according to the sensing data of the above sensing detection, target detection, trajectory tracking, trajectory correction, target association, and target identification are performed on the target.

It should be noted that if it is multi-sensing-node sensing, data fusion among the multiple sensing nodes is performed to obtain more complete and more accurate sensing results of target detection, trajectory tracking, trajectory correction, target association, and target identification.

In some embodiments, fusion of sensing results among multiple sensing nodes may be fused by means of combination, optimization, etc., and may also be fused with the help of a video.

In some embodiments, the sensing function entity transmits the sensing results with higher confidence and corresponding labels to the sensing server for data collection, and the sensing server performs periodic model training on the artificial intelligence model according to second indication information sent from the sensing control function.

In some embodiments, the sensing server sends at least one of the sensing data, the sensing result, or the artificial intelligence model to the core network element.

In some embodiments, the sensing processing function in the sensing function entity sends response information of the sensing service request message to the sensing management function; the sensing management function sends the response information of the sensing service request message to the core network, and reports the sensing result according to the sensing service request message.

In some embodiments, the sensing function entity performs target detection, trajectory tracking, trajectory correction, target association, and target identification according to information such as DOA estimation, SNR estimation, speed estimation, and power calculation reported by the sensing node, so as to obtain a movement trajectory of the target.

In some embodiments, since in wireless communication, especially in high-frequency band wireless communication, wireless signals are easily blocked, causing signal blind areas, thereby leading to missing parts of the target's trajectory. At this time, prediction of the missing parts of the trajectory may be performed according to known historical trajectory information of the target.

In some embodiments, in the initial training stage of the artificial intelligence model, the sensing server performs model training on the artificial intelligence model using initial test data, and the initial test data may also be actual test trajectory data of the target.

Exemplarily, a sequence of trajectory points for the target may be represented as [(Lo₁, La₁, H₁, V₁), (Lo₂, La₂, H₂, V₂), ..., (Loₙ, Laₙ, Hₙ, Vₙ)].

Loₜ represents a longitude of a sensed target trajectory point at the t-th moment, Lat represents a latitude of the sensed target trajectory point at the t-th moment, Ht represents a height of the sensed target trajectory point at the t-th moment, Vt represents the speed of the sensed target at the trajectory point (Lot, Lat, Ht) at the t-th moment, t=1, 2, ..., n, where n is an integer greater than or equal to 1.

In some embodiments, after the actual test trajectory data of the target is acquired, data preprocessing needs to be performed on this actual test trajectory data, and normalization processing is performed on the actual test trajectory data between a minimum value and a maximum value within a certain range, so as to realize standardization of training data.

In some embodiments, difference processing is performed on the trajectory data at adjacent moments in the sequence of trajectory points, that is, xₜ=Loₜ₊₁-Loₜ, yₜ=Laₜ₊₁-Laₜ, zₜ=Hₜ₊₁-Hₜ, vₜ=Vₜ₊₁-Vₜ.

Further, (n-1) trajectory sequences are obtained, that is, [(x₁, y₁, z₁, v₁), (x₂, y₂, z₂, v₂), ..., (xₙ₋₁, yₙ₋₁, zₙ₋₁, vₙ₋₁)].

In some embodiments, a sklearn tool in a machine learning library is utilized, and a MinMaxScaler() function is used to normalize the difference trajectory sequence data, scaling it to a range of [-1,1], and an output parameter scaler of the function is saved. A supervised sequence is constructed for the normalized data. Table 1 is a schematic diagram of a construction method of a supervised sequence provided in some embodiments of the present disclosure. Taking n=13 as an example, as shown in Table 1:

**Table 1**

| Sequence | Label |
|---|---|
| (x₁, y₁, z₁, v₁), (x₂, y₂, z₂, v₂), ..., (x₁₂, y₁₂, z₁₂, v₁₂) | (x₁₃, y₁₃, z₁₃, v₁₃) |
| (x₂, y₂, z₂, v₂), (x₃, y₃, z₃, v₃), ..., (x₁₃, y₁₃, z₁₃, v₁₃) | (x₁₄, y₁₄, z₁₄, v₁₄) |
| (x₃, y₃, z₃, v₃), (x₄, y₄, z₄, v₄), ..., (x₁₄, y₁₄, z_{14,} v₁₄) | (x_{15,} y₁₅, z₁₅, v₁₅) |
| (x₄, y₄, z₄, v₄), (x₅, y₅, z₅, v₅), ..., (x₁₅, y₁₅, z₁₅, v₁₅) | (x₁₆, y₁₆, z₁₆, v₁₆) |
| ... | ... |
| (xₜ₋₁₂, yₜ₋₁₂, zₜ₋₁₂, Vₜ₋₁₂), (xₜ₋₁₁, yₜ₋₁₁, zₜ₋₁₁, vₜ₋₁₁), ..., (xₜ₋₁, yₜ₋₁, zₜ₋₁, vₜ₋₁) | (xₜ, yₜ, zₜ, vₜ) |

Exemplarily, in a case where the constructed supervised sequence is [(x₁, y_{1,} z₁, v₁), (x₂, y₂, z₂, v₂), ..., (x₁₂, y₁₂, z₁₂, v₁₂)], then a label of this supervised sequence is (x₁₃, y₁₃, z₁₃, v₁₃); in a case where the constructed supervised sequence is [(x₂, y₂, z₂, v₂), (x₃, y₃, z₃, v₃), ..., (x₁₃, y₁₃, z₁₃, v₁₃)], then a label of this supervised sequence is (x₁₄, y₁₄, z₁₄, v₁₄); in a case where the constructed supervised sequence is [(x₃, y₃, z₃, v₃), (x₄, y₄, z₄, v₄), ..., (x₁₄, y₁₄, z₁₄, v₁₄)], then a label of this supervised sequence is (x₁₅, y₁₅, z₁₅, v₁₅); in a case where the constructed supervised sequence is [(x₄, y₄, z₄, v₄), (x₅, y₅, z₅, v₅), ..., (x₁₅, y₁₅, z_{15,} v₁₅)], then a label of this supervised sequence is (x₁₆, y₁₆, z₁₆, v₁₆); in a case where the constructed supervised sequence is [(xₜ₋₁₂, yₜ₋₁₂, zₜ₋₁₂, vₜ₋₁₂), (xₜ₋₁₁, yₜ₋₁₁, zₜ₋₁₁, vₜ₋₁₁), ..., (xₜ₋₁, yₜ₋₁, z_{t-1,} vₜ₋₁)], then a label of this supervised sequence is (xₜ, yₜ, zₜ, vₜ).

In some embodiments, the processed data set is split into a training data set and a test data set in a ratio of 80% to 20%, the training data set is used for training the artificial intelligence model, and the test data set is used for evaluating the artificial intelligence model.

In some embodiments, a long short term memory (LSTM) neural network model may be constructed, and network model parameters are configured to train the artificial intelligence model.

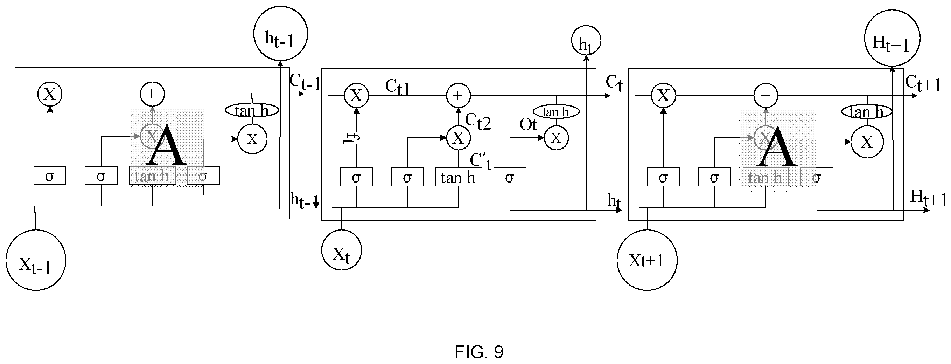

In some embodiments, the LSTM network model includes three gate information, namely, a forget gate, an input gate, and an output gate. FIG. 9 is a schematic diagram of a structure of a long short-term memory neural network model according to the embodiments of the present disclosure. As shown in FIG. 9, the forget gate mainly controls a proportion of forgetting data features of an upper layer network, that is, input data features are weighted and summed with a state of a previous sequence, and input to the forget gate to obtain a data feature output of the forget gate, a calculation manner thereof is as shown in formula (4): ${f}_{t} = σ \left({W}_{xf}⋅{x}_{t}+{W}_{hf}⋅{h}_{t - 1}+{b}_{f}\right)$ Formula (4) where ft is data feature output of the forget gate, W_{xf} is a weighting coefficient of the forget gate for data at a current moment, xt is input data features, W_{hf} represents a weighting coefficient of the forget gate for a state at a previous moment, hₜ₋₁ is a state of a previous sequence, b_{f} is a data bias constant of the forget gate, and σ(x) represents a sigmoid activation function.

Further, main memory data at the current moment is obtained by combining memory system data at the previous moment, and a calculation manner is as shown in formula (5): ${c}_{t 1} = {c}_{t - 1} ⊙ {f}_{t}$ Formula (5) where cₜ₁ is the main memory data at the current moment, and cₜ₋₁ is the memory system data at the previous moment.

In some embodiments, the input gate mainly filters effective features of the current input data, and compensates and updates the control data features of the forget gate in combination with the current data. A data feature extraction manner of the input gate is as shown in formula (6): ${i}_{t} = σ \left({W}_{xi}⋅{x}_{t}+{W}_{hi}⋅{h}_{t - 1}+{b}_{i}\right)$ Formula (6) where iₜ is data feature output of the input gate, Wₓᵢ is a weighting coefficient of the input gate for data at the current moment, Wₕᵢ is a weighting coefficient of the input gate for the state at the previous moment, and bᵢ is a data bias constant of the input gate.

Further, the input data features may compensate the memory data features to a certain extent, and it is necessary to filter the input gate feature parameters. A calculation manner of a filtering control coefficient is as shown in formula (7): ${c}_{t}^{′} = tan h \left({W}_{xc}⋅{x}_{t}+{W}_{hc}⋅{h}_{t - 1}+{b}_{c}\right)$ Formula (7) where ${c}_{t}^{′}$ is a feature filtering control coefficient of the input gate, W_{xc} is a filtering control weight coefficient for the input data at the current moment, W_{hc} is a filtering weight coefficient for the data state input at the previous moment, b_{c} is a filtering control data bias constant, and tan h(x) is an activation function.

Further, filtering control is performed on the input gate data to obtain memory system data at the next moment, and a calculation manner is as shown in formula (8): ${c}_{t 2} = {c}_{t}^{′} ⊙ {i}_{t}$ Formula (8) where cₜ₂ is the memory system data at the next moment.

In some embodiments, an output value of memory parameters at the current moment may be determined according to the main memory data at the current moment and the memory system data at the next moment, and a calculation manner is as shown in formula (9): ${c}_{t} = {c}_{t 1} + {c}_{t 2}$ Formula (9) where cₜ is an output value of the memory parameters at the current moment.

In some embodiments, the output gate mainly performs learning and training set prediction on the model according to the forgotten data features and the current data features, and a training method thereof is as shown in formula (10): ${h}_{t} = σ \left({W}_{xo}⋅{x}_{t}+{W}_{ho}⋅{h}_{t - 1}+{b}_{o}⊙tan h \left({c}_{t}\right)\right)$ Formula (10) where hₜ is output data of the output gate, Wₓₒ is a data weight coefficient at the current moment in the output gate, Wₕₒ is a data weight coefficient of the state at the previous moment in the output gate, and bₒ is a data bias constant in the output gate.

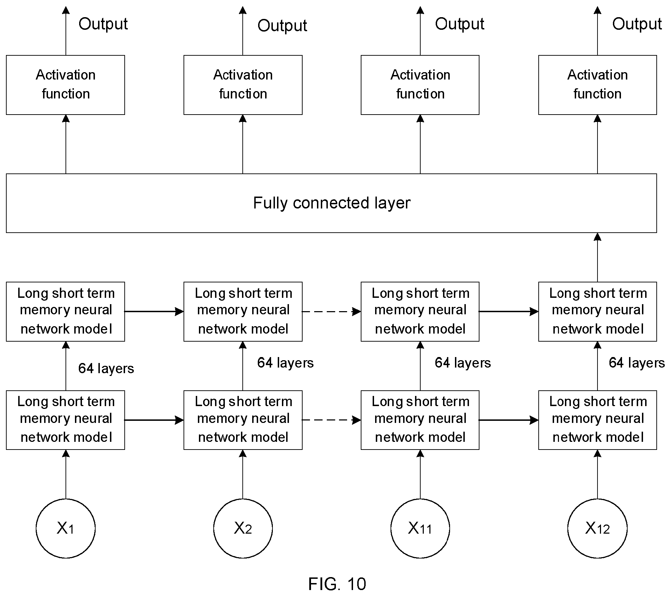

In some embodiments, the present disclosure may adopt an architecture of two layers of LSTM plus a fully connected layer. FIG. 10 is a schematic diagram of an architecture of a long short term memory neural network model according to the embodiments of the present disclosure. Table 2 shows a parameter configuration manner of the architecture of two layers of LSTM plus a fully connected layer, as shown in Table 2.

**Table 2**

| Parameter Item | Parameter Value |
|---|---|
| LSTM Layer Number | 2 |
| Hidden Layer Number | 64 |
| Activation Function | ReLU |
| Loss Function | MSE |

Exemplarily, in combination with FIG. 10 and Table 2, a hidden layer number of the LSTM may be 64 layers, the activation function may be ReLU, and the loss function may be a mean square error (MSE) function.

In some embodiments, after the artificial intelligence model is trained, the sensing server sends the trained artificial intelligence model to the sensing function entity.

It should be noted that, based on the sensing processing method provided in the embodiments of the present disclosure, the artificial intelligence model is trained by the sensing server with high storage capability and low computing power requirements, resulting in high training efficiency; then the sensing data is processed based on the trained artificial intelligence model, making the obtained sensing result more accurate, and the automatic processing of the sensing data realizes intelligent management of the sensing data, reducing manpower input; finally, the trained artificial intelligence model is sent to the sensing function entity, so that the sensing function entity is capable of predicting the sensing data based on the trained artificial intelligence model, realizing data sharing among various modules in the system.

In some embodiments, after the sensing function entity receives the trained artificial intelligence model, the sensing function entity preprocesses the actual test trajectory data (the preprocessing method is consistent with the preprocessing method during model training), inputs the preprocessed data set into the artificial intelligence model to obtain a predicted value (xₜ, yₜ, zₜ, vₜ), performs inverse normalization according to the scaler saved during data preprocessing, and then adds (Loₙ, Laₙ, Hₙ, Vₙ) to obtain a final predicted value (Loₙ₊₁, Laₙ₊₁, Hₙ₊₁, Vₙ₊₁).

In some embodiments, the sensing function entity transmits the actual test trajectory data with higher confidence and corresponding labels to the sensing server for data collection.

In some embodiments, the sensing function entity transmits the sensing results with higher confidence and corresponding labels to the sensing server for data collection, and the sensing server performs periodic model training on the artificial intelligence model according to the second indication information sent from the sensing control function for indicating a training period.

In some embodiments, the sensing processing function in the sensing function entity sends response information of the sensing service request message to the sensing management function, and the sensing management function sends the response information of the sensing service request message to the core network, reporting the sensing result according to the sensing service request message, thereby displaying a complete movement trajectory of the target.

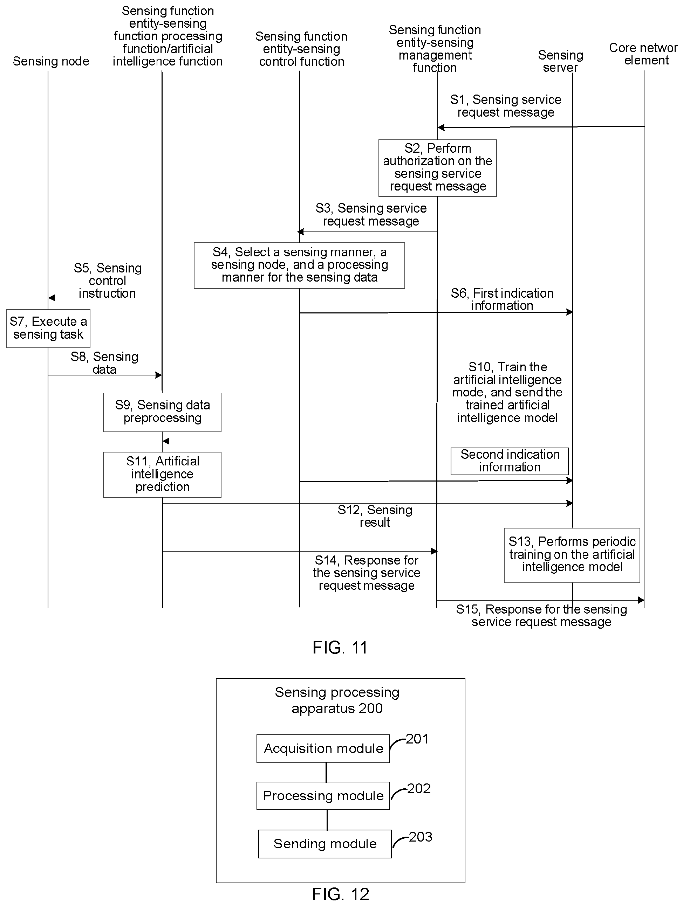

In some embodiments, the above method may also be implemented through a flow as shown in FIG. 11. Referring to FIG. 11, FIG. 11 is a flowchart of yet another sensing processing method according to the embodiments of the present disclosure. As shown in FIG. 11, taking the target being a drone as an example, the method includes the following S1 to S15.

In S1, a core network element sends a sensing service request message for the drone to a sensing management function in a sensing function entity.

The sensing service request message is used to indicate a sensing service requirement, and the sensing service request message may carry a sensing service type, a sensing area, a sensing reporting content, and a sensing reporting type.

The sensing service type is drone sensing. The sensing area may be within a radius of 1000 meters centered on a sensing node or other ranges. The sensing reporting content may include a position and a speed of the drone. The sensing reporting type may be sensing result reporting.

In S2, after acquiring the sensing service request message, the sensing management function perform authorization on the sensing service request message.

In S3, the sensing management function sends the sensing service request message after the authorization for the sensing service request message is passed to a sensing control function in the sensing function entity.

In S4, after acquiring the sensing service request message, the sensing control function selects a sensing manner, a sensing node, and a processing manner for the sensing data for the drone according to the sensing service request message.

In S5, the sensing control function sends a sensing control instruction to the sensing node.

The sensing control instruction is used to indicate the sensing node to execute a sensing task. The sensing control instruction includes sensing configuration information, and the sensing configuration information is used to configure at least one of a sensing resource, a sensing time, and a sensing signal.

In S6, the sensing control function sends first indication information for performing model training to the sensing server.

In S7, after receiving the sensing control instruction, the sensing node sends a sensing signal for the drone according to the sensing control instruction, executes the sensing task, and acquires sensing data for the drone.

In S8: the sensing node sends the sensing data for the drone to a sensing processing function of the sensing function entity.

In S9, the sensing processing function performs sensing data preprocessing on the sensing data.

The sensing data preprocessing includes performing feature data extraction or normalization processing on the sensing data.

In S10, after receiving the first indication information for performing model training sent from the sensing control function, the sensing server trains the artificial intelligence model, and sends the trained artificial intelligence model to the sensing processing function.

It should be noted that the training of the artificial intelligence model may refer to the above S201, which will not be repeated herein.

In S11, the sensing processing function performs artificial intelligence prediction on the artificial intelligence model to obtain a predicted sensing result.

In S12, the sensing processing function sends the sensing result to the sensing server for storage.

In S13, the sensing server performs periodic training on the artificial intelligence model based on the second indication information sent from the sensing control function for indicating a training period and the sensing result.

In S14, after the sensing result is obtained, the sensing processing function in the sensing function entity sends a response for the sensing service request message to the sensing management function.

In S15, the sensing management function sends the response for the sensing service request message to the core network element, and the core network element acquires the sensing result of the drone.

The sensing result may include the position and the speed of the drone, displaying a complete movement trajectory of the drone.

The solutions provided in the embodiments of the present disclosure are introduced above from the perspective of methods. It can be understood that, in order to implement the above functions, the sensing processing apparatus includes at least one of corresponding hardware structures or software modules for implementing various functions. Those skilled in the art should easily realize that the embodiments of the present disclosure are able to be implemented in the form of hardware or a combination of hardware and computer software in combination with units and steps of algorithms described in the embodiments disclosed in the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the embodiments of the present disclosure.

It can be understood that, in order to implement the above functions, the sensing processing apparatus includes corresponding hardware structures and/or software modules for implementing various functions. Those skilled in the art should easily realize that the present disclosure may be implemented in the form of hardware or a combination of hardware and computer software in combination with algorithms and steps of various examples described in the embodiments of the present disclosure. Whether a certain functionality is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The sensing processing apparatus may be divided into functional modules according to the above-mentioned method embodiments in the embodiments of the present disclosure. For example, each functional module may be divided corresponding to each function, or two or more functions may be integrated into one functional module. The above-mentioned integrated module may implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

FIG. 12 is a schematic diagram of a structure of a sensing processing apparatus according to the embodiments of the present disclosure. The sensing processing apparatus is applied to a sensing function entity and may perform the sensing processing method provided in the above method embodiments. As shown in FIG. 12, the sensing processing apparatus 200 includes: an acquisition module 201, a processing module 202, and a sending module 203.

In some embodiments, the acquisition module 201 is configured to acquire a trained artificial intelligence model from a sensing server.

In some embodiments, the processing module 202 is configured to process sensing data based on the artificial intelligence model to obtain a sensing result.

In some embodiments, the sending module 203 is configured to send the sensing result to a core network element.

In some embodiments, the acquisition module 201 is further configured to receive a sensing service request message sent from the core network element.

In some embodiments, the acquisition module 201 is further configured to select a sensing node to perform sensing detection in response to the sensing service request message, and acquire sensing data obtained by the sensing node during a sensing detection process.

In some embodiments, the processing module 202 is further configured to determine a sensing task based on the sensing service request message.

In some embodiments, the sending module 203 is further configured to select a sensing node to execute the sensing task, and send a sensing control instruction to the sensing node. The sensing control instruction is used to indicate the sensing node to execute the sensing task.

In some embodiments, the sensing control instruction includes sensing configuration information. The sensing configuration information is used to configure at least one of a sensing resource, a sensing time, or a sensing signal.

In some embodiments, the acquisition module 201 is further configured to receive the sensing data sent from the sensing node.

In some embodiments, the processing module 202 is further configured to perform authorization on the sensing service request message.

In some embodiments, the processing module 202 is further configured to determine the sensing task based on the sensing service request message after authorization for the sensing service request message is passed.

In some embodiments, the sensing function entity is configured with at least one of the following functions: a sensing control function, a sensing management function, an artificial intelligence function, a sensing processing function, and a data preprocessing function.

In some embodiments, the sensing control function includes at least one of: selection for a sensing node, management for a sensing resource, management for a sensing time, management for an artificial intelligence application, and management for information transmission.

In some embodiments, the sensing management function includes at least one of: acquiring a sensing service requirement, performing authorization on the sensing service requirement, and determining a sensing task based on the sensing service requirement.

In some embodiments, the artificial intelligence function includes at least one of: training the artificial intelligence model, and using the artificial intelligence model.

In some embodiments, the sending module 203 is further configured to send at least one of the following contents to the sensing server: first indication information for indicating whether the sensing server performs model training, and second indication information for indicating a training period.

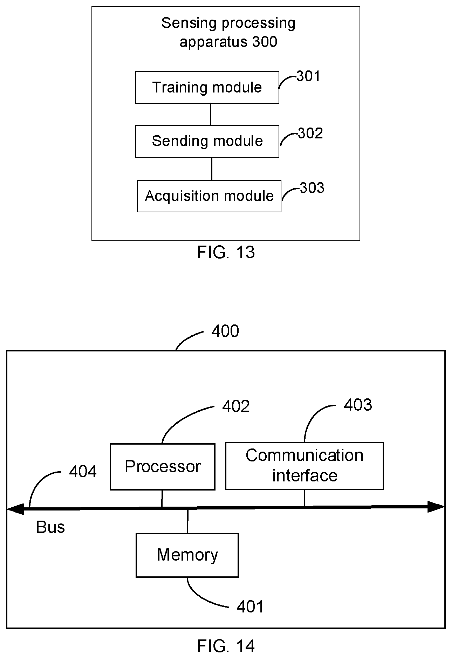

FIG. 13 is a schematic diagram of a structure of another sensing processing apparatus according to the embodiments of the present disclosure. The sensing processing apparatus is applied to a sensing server and may perform the sensing processing method provided in the above method embodiments. As shown in FIG. 13, the sensing processing apparatus 300 includes: a training module 301, a sending module 302, and an acquisition module 303.

In some embodiments, the training module 301 is configured to train an artificial intelligence model. The artificial intelligence model is configured to process sensing data to obtain a sensing result.

In some embodiments, the sending module 302 is configured to send the trained artificial intelligence model to a sensing function entity.

In some embodiments, the sensing server is configured with at least one of the following functions: a service control function, a data preprocessing function, a data storage function, and a data opening function.

In some embodiments, the service control function includes at least one of: management for an artificial intelligence application, management for a model training time, management for the data opening function, and management for information transmission.

In some embodiments, the data opening function is used to provide at least one of the sensing data, the sensing result, or the artificial intelligence model to the outside.

In some embodiments, the sending module 302 is further configured to send at least one of the following contents to a core network element: the sensing data, or the artificial intelligence model.

In some embodiments, the acquisition module 303 is configured to receive the sensing data sent from a sensing node.

In a case where the functions of the above-mentioned integrated modules are implemented in the form of hardware, a structure of a communication apparatus involved in the above-mentioned embodiments is provided in the embodiments of the present disclosure. As shown in FIG. 14, the communication apparatus 400 includes: a processor 402, and a bus 404. In some embodiments, the communication apparatus 400 may further include a memory 401. In some embodiments, the communication apparatus 400 may further include a communication interface 403.

In some embodiments, the processor 402 may implement or perform various exemplary logical blocks, modules and circuits described in combination with the embodiments of the present disclosure. The processor 402 may be a central processing unit, a general-purpose processor, a digital signal processor, an application-specific integrated circuit, a field programmable gate array or other programmable logic assmeblies, a transistor logic assmebly, a hardware component or any combination thereof, which may implements or executes the various exemplary logical blocks, modules and circuits described in combination with the embodiments of the present disclosure. The processor 402 may also be a combination that implements computing functions, such as a combination containing one or more microprocessors a combination of a DSP (digital signal processor) and a microprocessor, etc.

In some embodiments, the communication interface 403 is configured to connect to other devices through a communication network. The communication network may be the Ethernet, a radio access network, a wireless local area network (WLAN), or the like.

In some embodiments, the memory 401 may be a read-only memory (ROM) or other types of static storage devices that can store static information and instructions, a random access memory (RAM), or other types of dynamic storage devices that are capable of storing information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

As an implementation manner, the memory 401 may exist independently from the processor 402. The memory 401 may be connected to the processor 402 through the bus 404 for storing instructions or program codes. In a case where the processor 402 invokes and executes the instructions or program codes stored in the memory 401, the sensing processing method provided in the embodiments of the present disclosure may be implemented.

In another implementation, the memory 401 may also be integrated with the processor 402.

In some embodiments, the bus 404 may be an extended industry standard architecture (EISA) bus, etc. The bus 404 may be classified as an address bus, a data bus, a control bus, or the like. For ease of representation, only one thick solid line is used in FIG. 14 for representing the bus, but it does not indicate that there is only one bus or one type of bus.

A computer-readable storage medium (for example, a non-transitory computer-readable storage medium) is provided in some embodiments of the present disclosure. The computer-readable storage medium has computer program instructions stored therein, and in a case where the computer program instructions are run on a computer, the computer is caused to perform the sensing processing method according to any one of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

A computer program product including instructions is provided in the embodiments of the present disclosure, when the computer program product is run on a computer, the computer is enabled to perform the sensing processing method as described in any one of the above-mentioned embodiments.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A sensing processing method, **characterized by** being applied to a sensing function entity, the method comprising:
acquiring a trained artificial intelligence model from a sensing server;
processing sensing data based on the artificial intelligence model to obtain a sensing result; and
sending the sensing result to a core network element.

2. The method according to claim 1, wherein before processing the sensing data based on the artificial intelligence model to obtain the sensing result, the method further comprises:
receiving a sensing service request message sent from the core network element; and
in response to the sensing service request message, selecting a sensing node to perform sensing detection, and acquiring sensing data obtained by the sensing node during a sensing detection process.

3. The method according to claim 2, wherein in response to the sensing service request message, selecting the sensing node to perform sensing detection, and acquiring the sensing data obtained by the sensing node during the sensing detection process comprises:
determining a sensing task based on the sensing service request message;
selecting a sensing node to execute the sensing task, and sending a sensing control instruction to the sensing node, wherein the sensing control instruction is used to indicate the sensing node to execute the sensing task; and
receiving the sensing data sent from the sensing node.

4. The method according to claim 3, wherein the sensing control instruction comprises sensing configuration information, and the sensing configuration information is used to configure at least one of a sensing resource, a sensing time, and a sensing signal.

5. The method according to claim 3, wherein determining the sensing task based on the sensing service request message comprises:
performing authorization on the sensing service request message;
after authorization for the sensing service request message is passed, determining the sensing task based on the sensing service request message.

6. The method according to claim 1, wherein the sensing function entity is configured with at least one of the following functions: a sensing control function, a sensing management function, an artificial intelligence function, a sensing processing function, and a data preprocessing function.

7. The method according to claim 6, wherein the sensing control function comprises at least one of: selection for a sensing node, management for a sensing resource, management for a sensing time, management for an artificial intelligence application, and management for information transmission.

8. The method according to claim 6, wherein the sensing management function comprises at least one of: acquiring a sensing service requirement, performing authorization on the sensing service requirement, and determining a sensing task based on the sensing service requirement.

9. The method according to claim 6, wherein the artificial intelligence function comprises at least one of: training the artificial intelligence model, and using the artificial intelligence model.

10. The method according to claim 1, further comprising:
sending at least one of the following contents to the core network element: a sensing service request message, a sensing service response message, or the sensing result; wherein the sensing service request message is used to indicate a sensing service requirement.

11. The method according to claim 1, further comprising: sending a sensing control instruction to a sensing node; wherein the sensing control instruction is used to select the sensing node to execute a sensing task.

12. The method according to claim 1, further comprising: sending at least one of the following contents to the sensing server: first indication information for indicating whether the sensing server performs model training, and second indication information for indicating a training period.

13. A sensing processing method, **characterized by** being applied to a sensing server, the method comprising:
training an artificial intelligence model, wherein the artificial intelligence model is used to process sensing data to obtain a sensing result; and
sending the trained artificial intelligence model to a sensing function entity.

14. The method according to claim 13, wherein the sensing server is configured with at least one of the following functions: a service control function, a data preprocessing function, a data storage function, and a data opening function.

15. The method according to claim 14, wherein the service control function comprises at least one of: management for an artificial intelligence application, management for a model training time, management for the data opening function, and management for information transmission.

16. The method according to claim 14, wherein the data opening function is used to provide at least one of the sensing data, the sensing result, and the artificial intelligence model to the outside.

17. The method according to claim 13, further comprising:
sending at least one of the following contents to a core network element: the sensing data, the sensing result, and the artificial intelligence model.

18. The method according to claim 13, further comprising:
receiving the sensing data sent from a sensing node.

19. An integrated sensing and communication system, **characterized by** comprising:
a sensing server, configured to train an artificial intelligence model; and
a sensing function entity, configured to acquire the trained artificial intelligence model from the sensing server; process sensing data based on the artificial intelligence model to obtain a sensing result, and send the sensing result to a core network element.

20. The system according to claim 19, further comprising:
a sensing node, configured to send a sensing signal, acquire the sensing data; and send the sensing data to the sensing function entity.

21. A communication apparatus, **characterized by** comprising: a memory and a processor; wherein the memory is coupled to the processor; the memory is configured to store instructions executable for the processor; and the processor, upon executing the instructions, performs the method according to any one of claims 1 to 12, or performs the communication method according to any one of claims 13 to 18.

22. A computer-readable storage medium, **characterized in that** the computer-readable storage medium stores computer instructions thereon, and in response to the computer instructions being run on a computer, the computer is enabled to perform the method according to any one of claims 1 to 12, or to perform the method according to any one of claims 13 to 18.
